(19) Europäisches Patentamt
European Patent Office
Office européen des brevets

(11) EP 0 712 908 B1

(12) EUROPÄISCHE PATENTSCHRIFT

(45) Veröffentlichungstag und Bekanntmachung des Hinweises auf die Patenterteilung:
**21.06.2000 Patentblatt 2000/25**

(51) Int Cl.[7]: **C09B 67/20**, C09D 11/02, C09B 67/22

(21) Anmeldenummer: **95117131.3**

(22) Anmeldetag: **31.10.1995**

# (54) Pigmentzubereitungen auf Basis von Monoazopigmenten

Pigment preparations based on monoazo pigments

Préparations pigmentaires sur base de pigments monoazoiques

(84) Benannte Vertragsstaaten:
**CH DE ES FR GB IT LI**

(30) Priorität: **17.11.1994 DE 4440928**

(43) Veröffentlichungstag der Anmeldung:
**22.05.1996 Patentblatt 1996/21**

(73) Patentinhaber: **Clariant GmbH**
**65929 Frankfurt am Main (DE)**

(72) Erfinder:
- **Weide, Joachim**
**D-65779 Kelkheim (DE)**
- **Jung, Rüdiger, Dr.**
**D-65779 Kelkheim (DE)**
- **Metz, Hans Joachim, Dr.**
**D-64285 Darmstadt (DE)**

(56) Entgegenhaltungen:
**EP-A- 0 039 307**
**BE-A- 770 037**
**GB-A- 2 263 912**
**US-A- 3 360 479**

- **DATABASE WPI Section Ch, Week 9508 Derwent Publications Ltd., London, GB; Class A82, AN 95-057392 & JP-A-06 336 557 ( DAINIPPON INK & CHEM INC) , 6.Dezember 1994**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 712 908 B1

## Beschreibung

Die vorliegende Erfindung liegt auf dem Gebiet der Monoazopigmentzubereitungen.

Es ist bekannt, daß Pigmente durch Zumischen von Säuregruppen enthaltenden Farbstoffen in den färbetechnischen Eigenschaften in verschiedenen Bindemitteln verbessert werden können.

So sind aus der DE-A 20 12 153 (US-PS 3,725,101) Gemische aus Pigmenten und zwei oder mehr Farbstoffen bekannt, bei denen ein Teil der Farbstoffe polare Gruppen wie Carbonsäure-, Sulfonsäure- oder auch Carbamoyl- oder Sulfamoylgruppen enthalten. Der Anteil an diesen sauren Farbstoffen kann 0,5 bis 20 Mol-%, vorzugsweise 1 bis 5 Mol-%, betragen.

Aus der DE-A 21 35 468 (US-PS 3,759,733) sind Pigmentzubereitungen aus Kupplungsprodukten von diazotierten Anilinen und Acetoacetylamiden bekannt, die einen wasserlöslichen Farbstoff auf Basis des Kupplungsproduktes enthalten. Der Anteil des löslichen Farbstoffs kann 0,1 bis 20 Gew.-%, bezogen auf die Zubereitung, betragen.

In der DE-A 20 12 152 (US-PS 3,759,731) wird ein Verfahren zur Herstellung von Disazopigmentgemischen beschrieben, nach dem tetrazotiertes 3,3'-Dichlor-4,4'-diaminodiphenyl mit einer Mischung im Verhältnis 1:2 Mol kuppelt, die eine oder zwei verschiedene unpolare und eine oder zwei verschiedene polare Kupplungskomponenten der Acetoacetarylid- oder 1-Arylpyrazolon-5-Reihe enthält. Die polaren Komponenten tragen eine oder zwei Carbonsäure- und/oder Sulfonsäuregruppen. Der Anteil der polaren Kupplungskomponenten liegt bei 0,5 bis 20 Mol-%.

Aus der DE-A 21 22 521 (US-PS 3,775,148) sind modifizierte Diarylidpigmente bekannt, die neben dem Pigment auf der Basis 4,4'-Diaminodiphenyl mit Acetoacetarylid, 1-Phenyl-3-methylpyrazolon-5 oder 2-Hydroxynaphthalin-3-carboxanilid bis zu 25 Gew.-% eines wasserlöslichen Farbstoffs auf der gleichen Basis enthalten.

Weiterhin werden in der EP-A-0 012 944 (US-PS 4,474,609) Monoazopigmentgemische beschrieben, die durch Kupplung von diazotierten Anilinen auf Acetoacetarylamide erhalten werden, wobei mehr als eine Diazo-und/oder Kupplungskomponente verwendet werden und wobei 0,1 bis 20 Mol.-% der Diazo- und/oder Kupplungskomponenten saure Gruppen enthalten und im Kupplungsprodukt die reaktionsfähigen sauren Gruppen mit quaternären kationenaktiven Verbindungen umgesetzt werden.

In der EP-A-0 176 857 (US-PS 4,720,304) sind Azopigmentzubereitungen beschrieben, die neben den in Pigmentzubereitungen üblichen Bestandteilen auch 0,2 % bis 10 % von Farbstoffen enthalten, die einen (Imidazolyl)-methyl-Substituenten aufweisen.

In allen vorstehend genannten Druckschriften wird zur Verbesserung der anwendungstechnischen und coloristischen Eigenschaften der Pigmente ein modifiziertes Farbmittel eingesetzt. Die eingesetzten Farbmittelzusätze sind jedoch nicht bei allen Azopigment-Körpern wirksam und durch ihre Eigenfarbe in ihrer Einsatzbreite beschränkt.

In der GB-A-2263912 werden Farbstoffzusammensetzungen beschrieben, die einen oder mehrere Direktfarbstoffe und einen optischen Aufheller auf der Basis von N,N'-Bis(triazinyl)-4,4'-diaminostilben-2,2'-disulfonsäure-Derivaten enthalten.

Die Aufgabe der vorliegenden Erfindung war es, farblose Verbindungen zu finden und damit Azopigmentzubereitungen zu entwickeln, die in ihren coloristischen, rheologischen und drucktechnischen Eigenschaften verbessert sind.

Es wurde gefunden, daß diese Aufgabe überraschenderweise durch den Zusatz von N,N'-Bis(triazinyl)-4,4'-diamino-stilben-2,2'-disulfonsäure-Derivaten zu Monoazopigmenten der nachstehend genannten Formel (I) gelöst wird.

Gegenstand der vorliegenden Erfindung ist eine Pigmentzubereitung, enthaltend

a) mindestens ein Monoazopigment der Formel (I)

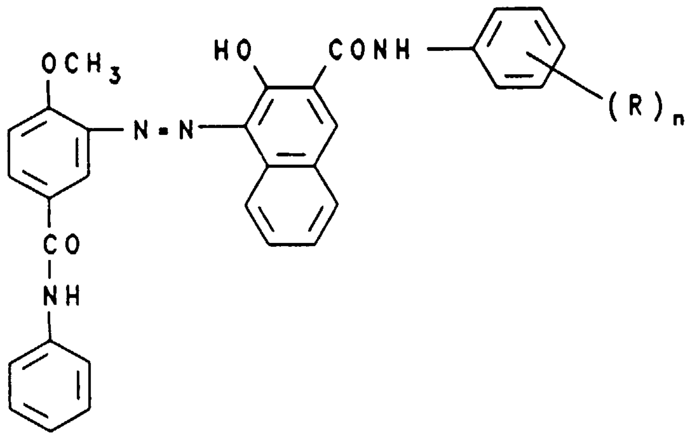

(I)

worin

R gleiche oder verschiedene der Bedeutungen $C_1$-$C_3$-Alkyl, $C_1$-$C_3$-Alkoxy, Chlor und Wasserstoff hat und
n ein Zahl von 1 bis 3 ist,

b) mindestens eine Verbindung der Formel (II)

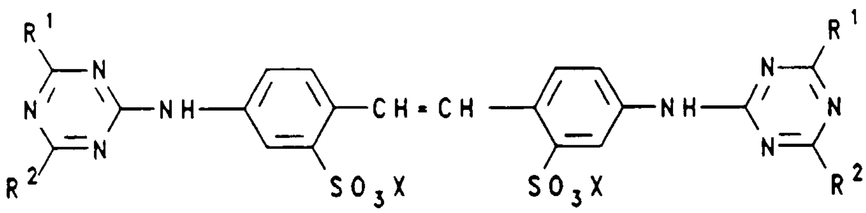

(II)

worin

$R^1$ und $R^2$ gleich oder verschieden sind und für einen Rest der Formeln

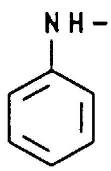 , 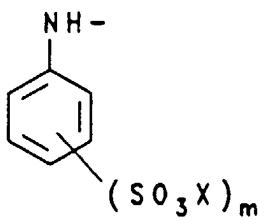 , $(HOCH_2CH_2)_2N$-, $HOCH_2CH_2NH$-

oder für einen fünf- bis siebengliedrigen gesättigten oder ungesättigten aliphatischen oder aromatischen Heterocyclus stehen, der 1 bis 3 Heteroatome aus der Gruppe Stickstoff, Sauerstoff oder Schwefel enthält,

m für die Zahl 1 oder 2, und
X für Wasserstoff, ein Alkalimetall oder für ein stöchiometrisches Equivalent eines Erdalkalimetalls stehen;

und gegebenenfalls
c) weitere übliche Bestandteile und Additive.

Bevorzugt sind vorstehend beschriebene Pigmentzubereitungen, worin

R gleiche oder verschiedene der Bedeutungen Wasserstoff, Methyl, Ethyl, Methoxy, Ethoxy und Chlor hat,

$R^1$ und $R^2$ gleich oder verschieden sind und für einen Rest der Formeln

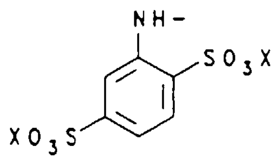 , 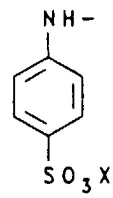 , 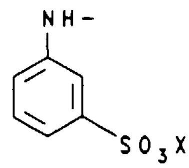 , $HOCH_2CH_2NH-$,

oder für einen Morpholinyl-, 1-Piperidinyl-, 1-Pyrrolidinyl- oder 1-Pyrrolyl-Rest vorzugsweise einen 1-Morpholinyl-Rest,
stehen und

X Wasserstoff, Na oder K ist.

Besonders bevorzugt sind vorstehend beschriebene Pigmentzubereitungen, worin das Monoazopigment die Struktur der Formel (Ia) hat

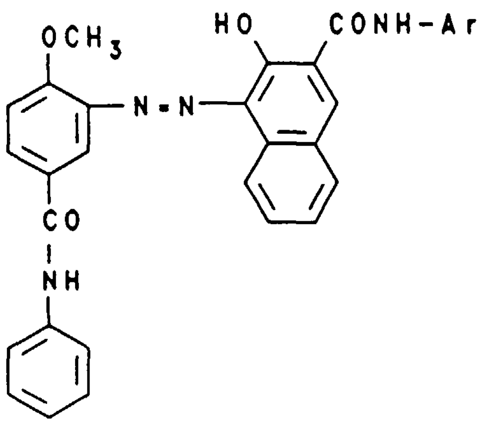

(Ia)

worin Ar die Bedeutung

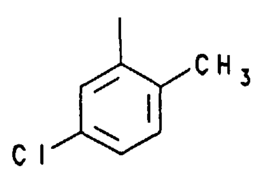 oder 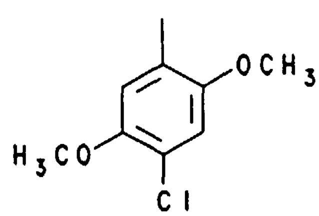

hat.

Besonders bevorzugt sind weiterhin Pigmentzubereitungen, wie vorstehend beschrieben, worin das N,N'-Bis(triazinyl)-4,4'-diaminostilben-2,2'-disulfonsäure-Derivat die Formel (IIa) hat

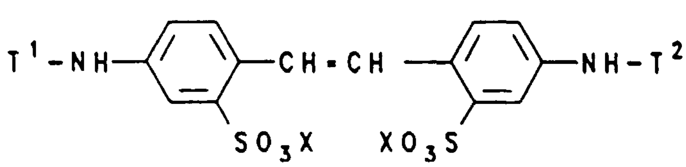

(IIa)

worin $T^1$ und $T^2$ gleich oder verschieden sind, vorzugsweise gleich sind, und die Bedeutungen

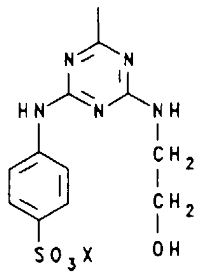 , 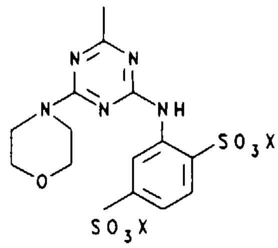 oder 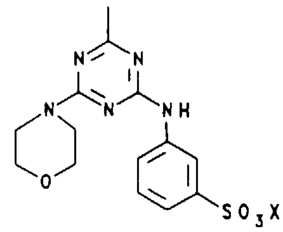

haben und X für Wasserstoff oder Na steht.

Die besagten Diamino-stilben-Derivate werden in der trans-Konfiguration eingesetzt.

Der Anteil der Komponente b) in der erfindungsgemäßen Pigmentzubereitung beträgt zweckmäßigerweise 0,1 bis 8 Gew.-%, vorzugsweise 0,4 bis 3 Gew.-%, bezogen auf das Gewicht der Pigmentzubereitung (100 Gew.-%).

Weitere übliche Bestandteile und Additive c) sind beispielsweise Harze, wie Kolophonium oder Kolophoniumderivate wie z.B. hydriertes, dehydriertes, disproportioniertes oder polymerisiertes Kolophonium, Tallharze und weitere übliche Dispergierhilfsmittel. Der Anteil der Komponente c) beträgt zwischen 0 und 30 Gew.-%, vorzugsweise 0,1 bis 20 Gew.-%, des Gesamtgewichts der Pigmentzubereitung.

Das Monoazopigment der Formel (I) ist dementsprechend in einer Menge von 62 bis 99,9 Gew.-%, vorzugsweise 77 bis 99,5 Gew.-%, enthalten.

Gegenstand der Erfindung ist auch ein Verfahren zur Herstellung besagter Pigmentzubereitung, dadurch gekennzeichnet, daß man die Kupplungsreaktion zur Herstellung des Monoazopigments der Formel (I) oder (Ia) in Gegenwart der Komponente b) durchführt oder indem man die Komponente b) nach Beendigung der Kupplungsreaktion mit der wäßrigen Pigmentsuspension oder einem in Wasser suspendierten Preßkuchen des Monoazopigments vereinigt. Bei der zuerst genannten Verfahrensweise wird die Komponente b) der Kupplungskomponente oder/und der Diazokomponente vor der Kupplung zugegeben, oder die Komponente b) wird in Form einer wäßrigen Suspension oder Lösung während der Kupplungsreaktion zugegeben. Es ist bevorzugt, die Komponente b) in einer wäßrigen Suspension oder Lösung der wäßrigen neutralisierten Pigmentsuspension nach Beendigung der Kupplungsreaktion zuzugeben und das Gemisch auf eine Temperatur von 20 bis 150°C zu erwärmen, wobei sich die Pigmenteigenschaften in vorteilhafter Weise verändern (Finish). Die Zubereitung wird dann in üblicher Weise aufgearbeitet und zweckmäßigerweise als Pulver isoliert. Die Zugabe der Komponente c) kann zu einem beliebigen Zeitpunkt während der vorstehend beschriebenen Verfahrensschritte erfolgen.

Die Herstellung der Monazopigmente der Formel (I) und (Ia) erfolgt in üblicher, dem Fachmann allseits geläufiger Art und Weise durch Azokupplung von diazotiertem 3-Amino-4-methoxy-benzanilid (Diazokomponente) mit einem N-Phenyl-3-hydroxy-2-naphthalincarboxamid (Kupplungskomponente). Die Pigmente der genannten Art sind beispielsweise in W. Herbst, K. Hunger, Industrielle Organische Pigmente, VCH-Verlag, 1987, beschrieben.

Die Herstellung der N,N'-Bis(triazinyl)-4,4'-diaminostilben-2,2'-disulfonsäure-Derivate der Formel (II) erfolgt nach üblichen Methoden, beispielsweise durch Umsetzung von 4,4'-Diaminostilben-2,2'-disulfonsäure mit 2 Molequivalenten Cyanurchlorid und 2 bis 4 Molequivalenten des den Resten $R^1$ und/oder $R^2$ entsprechenden Amins, wie beschrieben in DE-A-1 206 296 und BE-A-569 912.

Die in den erfindungsgemäßen Zubereitungen verwendeten Verbindungen der Formel (II) und (IIa) weisen keine Eigenfarbe auf und verursachen keine unerwünschten Verschiebungen in Farbton und keine Verschlechterung der Farbtonreinheit. Die guten Lösungsmittelechtheiten der verwendeten Monoazopigmente der Formel (I) und (Ia) bleiben jedoch in der erfindungsgemäßen Pigmentzubereitung erhalten.

Die erfindungsgemäßen Pigmentzubereitungen eignen sich besonders gut zur Herstellung von Druckfarben und zeigen hervorragende Eigenschaften hinsichtlich der für Druckfarbenpigmente wichtigen Kriterien wie Transparenz, Glanz und Farbstärke.

Besonders bevorzugt ist die Verwendung der erfindungsgemäßen Pigmentzubereitungen zur Herstellung von lösungsmittelhaltigen Tief- und Flexodruckfarben sowie von solchen auf wäßriger Basis.

Gegenstand der Erfindung ist auch die Verwendung der erfindungsgemäßen Pigmentzubereitungen zur Herstellung von Druckfarben.

In den folgenden Beispielen beziehen sich "Teile auf das Gewicht, "Volumenteile" verhalten sich zu Gewichtsteilen wie Liter zu Kilogramm.

Beispiel 1

193,6 Teile 3-Amino-4-methoxybenzanilid werden in 2000 Volumenteilen Wasser und 360 Volumenteilen 31

%iger Salzsäure 15 Minuten angerührt und mit Eis auf 10°C eingestellt. Dann läßt man in 5 Minuten 112 Volumenteile einer 38 %igen Natriumnitritlösung unter die Oberfläche zulaufen. Es wird 1 Stunde bei 10 bis 15°C nachgerührt. Die so erhaltene Diazoniumlösung klärt man durch Filtrieren und zerstört den Nitritüberschuß durch Amidosulfonsäure.

205,6 Teile N-(5-Chlor-2-methylphenyl)-3-hydroxy-2-naphthalincarboxamid und 58,4 Teile N-(4-Chlor-2,5-dimethoxyphenyl)-3-hydroxy-2-naphthalincarboxamid werden in 1600 Volumenteilen Wasser und 264 Teilen Natriumhydroxydlösung mit einem spezifischen Gewicht von 1,35 gelöst und in 30 Minuten bei 0 bis 10°C auf eine mit Eis auf 0°C gekühlte Lösung von 154,4 Teilen Eisessig und 16 Teilen Alkylpolyglykolether (®Genapol T 250) in 1600 Volumenteilen Wasser zulaufen gelassen, wobei sich am Ende der Fällung ein pH-Wert von 5,6 bis 6,0 einstellt. Anschließend wird 30 Minuten nachgerührt und der Fällung noch 46 Teile einer 30 %igen wäßrigen Lösung von Cocosalkyldimethylaminoxid und 40 Teile Natriumacetat zugesetzt.

Dann läßt man die Diazoniumlösung in 90 Minuten bei 40 bis 45°C unter die Oberfläche der ausgefällten Kupplungskomponente zulaufen, wobei sich ein pH-Wert von 3,5 bis 4,0 einstellt. Gegen Ende der Kupplung tritt Diazoüberschuß auf, der beim 30 minütigem Nachrühren bei 70°C verschwindet.

Nach beendeter Kupplung gibt man 24 Teile eines $C_{12}$-$C_{15}$-Fettalkohol-ethylenoxid-propylenoxid-Adduktes (aus 1 Mol Alkohol und 8 Mol Ethylenoxid und 4 Mol Propylenoxid) und 5,5 Teile eines Stilbendisulfonsäurederivats folgender Formel

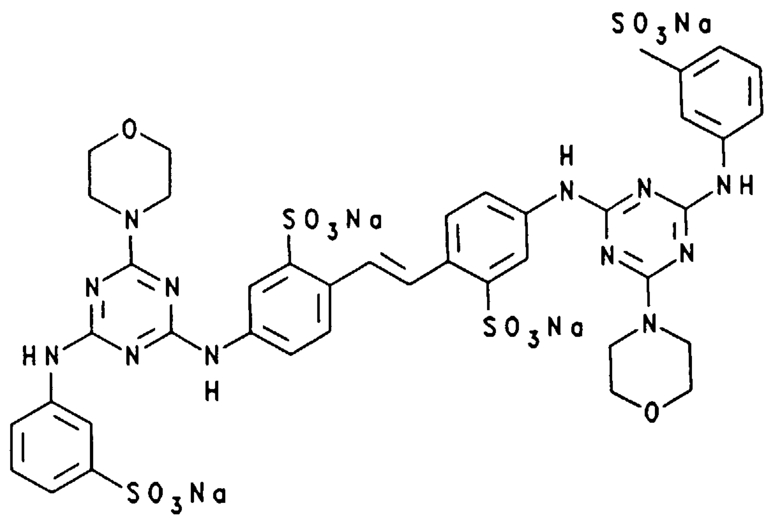

gelöst in 200 Volumenteilen Wasser zu und rührt 30 Minuten nach. Dann wird heiß filtriert und mit 50°C heißem Wasser gewaschen. Nach dem Trocknen bei 70°C und Mahlen erhält man 518 Teile eines roten Pigmentpulvers.

Setzt man die vorstehend hergestellte Pigmentzubereitung zur Herstellung einer lösungsmittelhaltigen Nitrocellulose-Tiefdruckfarbe ein und beurteilt die damit hergestellten Drucke mit einer Druckfarbe auf der Basis einer entsprechenden Pigmentzubereitung ohne den erfindungsgemäßen Einsatz der Stilbendisulfonsäureverbindung, so zeigt die nach Beispiel 1 hergestellte Pigmentzubereitung bei höherer Farbstärke eine deutlich höhere Transparenz und deutlich höheren Glanz.

Beispiel 2

Man bereitet eine Diazoniumlösung, wie in Beispiel 1 beschrieben.

290,7 Teile N-(4-Chlor-2,5-dimethoxyphenyl)-3-hydroxy-2-naphthalincarboxamid werden in 1600 Volumenteilen Wasser und 264 Teilen Natriumhydroxydlösung mit einem spezifischen Gewicht von 1,35 gelöst und in 30 Minuten bei 0 bis 10°C auf eine mit Eis auf 0° gekühlte Lösung von 33,6 Teilen Eisessig, 151 Volumenteilen 31 %iger Salzsäure und 13,3 Teilen Alkylpolyglykolether (®Genapol T 250) in 1600 Volumenteilen Wasser zulaufen gelassen, wobei sich am Ende der Fällung ein pH-Wert von 4,5 bis 5,6 einstellt.

Dann läßt man die Diazoniumlösung in 90 Minuten bei 40 bis 45°C unter die Oberfläche der ausgefällten Kupplungskomponente zulaufen, wobei der pH-Wert durch Zulauf einer 6 %igen Natronlauge zwischen 5,2 und 5,0 gehalten wird. Gegen Ende der Kupplung tritt Diazoüberschuß auf, der bei 30 minütigem Nachrühren verschwindet.

Nach beendeter Kupplung gibt man 24 Teile eines $C_{12}$-$C_{15}$-Fettalkohol-ethylenoxid-propylenoxid-Adduktes, 16,2 Teile einer 30 %igen wäßrigen Lösung von Cocosalkyldimethylaminoxid und 1,9 Teile eines Stilbendisulfonsäurederivats folgender Formel

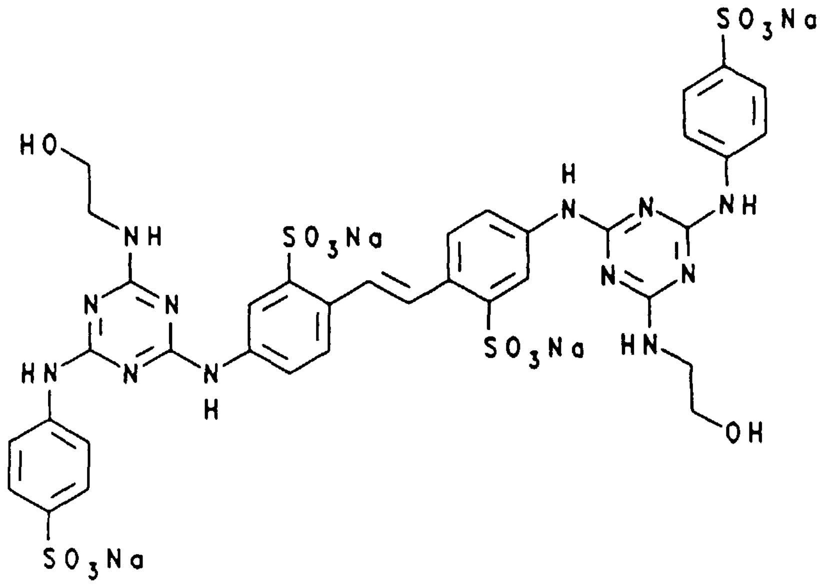

gelöst in 200 Volumenteilen Wasser zu und rührt 30 Minuten nach. Dann wird auf 60°C geheizt, heiß filtriert und mit 50°C heißem Wasser gewaschen. Nach dem Trocknen bei 70°C und Mahlen erhält man 530 Teile eines roten Pigmentpulvers.

Setzt man die vorstehend hergestellte Pigmentzubereitung zur Herstellung einer lösungsmittelhaltigen Nitrocellulose-Tiefdruckfarbe ein und beurteilt die damit hergestellten Drucke mit einer Druckfarbe auf der Basis einer entsprechenden Pigmentzubereitung ohne den erfindungsgemäßen Einsatz der Stilbendisulfonsäureverbindung, so zeigt die nach Beispiel 2 hergestellte Pigmentzubereitung bei höherer Farbstärke eine deutlich höhere Transparenz und deutlich höheren Glanz.

Beispiel 3

Man bereitet eine Diazoniumlösung wie in Beispiel 1 beschrieben.

249,2 Teile N-(5-Chlor-2-methylphenyl)-3-hydroxy-2-naphthalincarboxamid werden in 1600 Volumenteilen Wasser und 217 Teilen Natriumhydroxydlösung mit einem spezifischen Gewicht von 1,35 bei 95°C gelöst, mit Eis auf 50°C abgekühlt, und in 30 Minuten bei 0 bis 10°C auf eine mit Eis auf 0°C gekühlte Lösung von 128 Teilen Eisessig und 16 Teilen Alkylpolyglykolether (®Genapol T 250) in 3200 Volumenteilen Wasser zulaufen gelassen, wobei sich am Ende der Fällung ein pH-Wert von 5,5-6,5 einstellt.

Dann wird die Diazoniumlösung in 2 Stunden bei 40 bis 45°C unter die Oberfläche der ausgefällten Kupplungskomponente zulaufen gelassen, wobei gegen Ende der Kupplung Diazoüberschuß auftritt, der beim Nachrühren in 15-30 Minuten verschwindet.

Nach beendeter Kupplung gibt man noch 5,2 Teile eines Stilbendisulfonsäurederivats folgender Formel

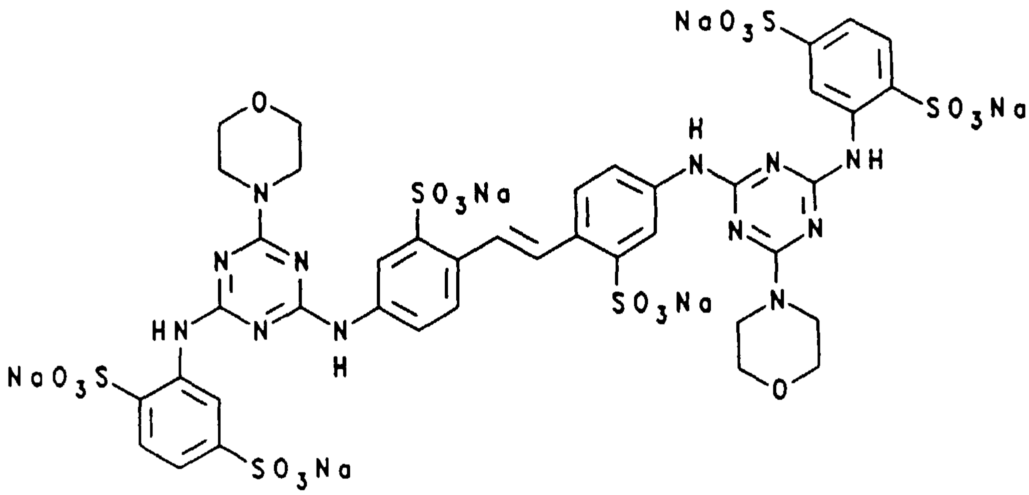

gelöst in 200 Volumenteilen Wasser zu und rührt 30 Minuten nach. Dann wird filtriert und mit Wasser salzfrei gewaschen. Nach dem Trocknen bei 65°C und Mahlen erhält man 450 Teile eines roten Pigmentpulvers.

Setzt man die vorstehend hergestellte Pigmentzubereitung zur Herstellung einer lösungsmittelhaltigen Nitrocellulose-Tiefdruckfarbe ein und beurteilt die damit hergestellten Drucke mit einer Druckfarbe auf der Basis einer entsprechenden Pigmentzubereitung ohne den erfindungsgemäßen Einsatz der Stilbendisulfonsäureverbindung, so zeigt die nach Beispiel 3 hergestellte Pigmentzubereitung bei höherer Farbstärke eine deutlich höhere Transparenz und deutlich höheren Glanz.

Beispiel 4

Verfährt man wie in Beispiel 1 und ersetzt die eingesetzte Stilbendisulfonsäureverbindung durch die in Beispiel 2 eingesetzte, so erhält man ein Pigment mit den gleichen guten coloristischen Eigenschaften, wie in Beispiel 1 beschrieben.

Beispiel 5

Verfährt man wie in Beispiel 1 und ersetzt die eingesetzte Stilbendisulfonsäureverbindung durch die in Beispiel 3 eingesetzte, so erhält man ein Pigment mit den gleichen guten coloristischen Eigenschaften, wie in Beispiel 1 beschrieben.

Die Pigmentzubereitungen aus den vorstehenden Beispielen werden auf die nachstehend beschriebene Arbeitsweise zu Druckfarben verarbeitet, und mit diesen Druckfarben werden Drucke erzeugt.

Herstellung von Tiefdruckfarben im Paint Shaker und anschließender Applikation auf einen Druckträger.

1. Firnis

| | |
|---|---|
| 30,0 % | Collodiumwolle A 400 (65% Ethanol feucht) |
| 4,0 % | Weichmacher, beispielsweise ®Genomoll 140 (Dibutylphthalat) |
| 8,0 % | Methoxypropanol |
| 58,0 % | Ethanol (wasserfrei) |
| 100,0 % | (Feststoffgehalt 23,5 %) |

2. Lösemittelgemisch:

50 % Ethanol

50 % Ethylacetat

Von Probe und Vergleich werden je 2 Farben nach folgendem Verfahren hergestellt:

In einem 150 ml Plastikbecher mit Steckdeckel werden 113 g Glaskugeln (2 mm Durchmesser) eingefüllt und

| | |
|---|---|
| 5,4 g | Pigment |

(fortgesetzt)

| | |
|---|---|
| 15,0 g | Nitrocellulose (NC)-Firnis (1.) |
| 15,6 g | Lösemittelgemisch (2.) |
| 36,0 g | eingewogen (15 %iger Mahlgutansatz). |

Jeweils 2 Becher mit Probe und Vergleich werden gleichzeitig mit der Schüttelmaschine 30 Minuten lang dispergiert.

3. Anschließend werden in je einen Becher von Probe und Vergleich

| | |
|---|---|
| 9,0 g | NC-Firnis (1.) zugegeben |

und nochmals 2 Minuten mit der Schüttelmaschine geschüttelt. Diese jetzt 12 %igen Konzentrate werden über ein Sieb in eine Glasflasche abgefüllt und zur Messung der Viskosität verwendet.

4. In die beiden weiteren Becher von Probe und Vergleich werden je

| | |
|---|---|
| 32,0 g | NC-Firnis (1.) und |
| 4,0 g | Methoxypropanol zugegeben |

und nochmals 2 Minuten geschüttelt. Diese jetzt 7,5 %igen fertigen Druckfarben werden von den Glaskugeln abgetrennt und in eine Glasflasche gefüllt. Vor dem Verdrucken bleibt die Farbe 10 Minuten zum Entweichen der Luftblasen stehen.

5. Druck

Die oben beschriebenen 7,5 %igen Druckfarben werden mit einer Tiefdruck-probedruckmaschine je einmal auf Papier und Polypropylen (PP)-Folie gedruckt, und zwar Probe und Vergleich nebeneinander auf dem gleichen Druckträger.

Jeder Druck wird sofort nach dem Drucken einige Sekunden lang auf eine Heizplatte mit einer Temperatur von 60°C gelegt, um ein Weißanlaufen des Druckes zu verhindern.

6. Viskositätsmessung

Die Messung der Viskosität wird an den oben beschriebenen 12 %igen Konzentraten durchgeführt ( z.B. mit dem Rotovisko RV3 oder RV1 2 oder Viskotester VT 500, Fa. Haake, Karlsruhe).

7. Beurteilung

Anhand des Andruckes auf Papier werden Farbstärke, Farbton und Reinheit sowie am Druck über Schwarz die Transparenz bewertet.

Am Druck auf PP-Folie (unterlegt mit Papier) oder Alu-Folie wird der Glanz und die Transparenz bewertet.

Weicht die Farbstärke der beiden Farben um mehr als 5% voneinander ab, so wird die kräftigere Farbe (Probe oder Typ) entsprechend mit Firnis (1.) abgeschwächt (z.B. auf 95 Teile, 90 Teile usw.) und erneut gegen die 2. Farbe angedruckt.

## Patentansprüche

**1.** Pigmentzubereitung, enthaltend

a) mindestens ein Monoazopigment der Formel (I)

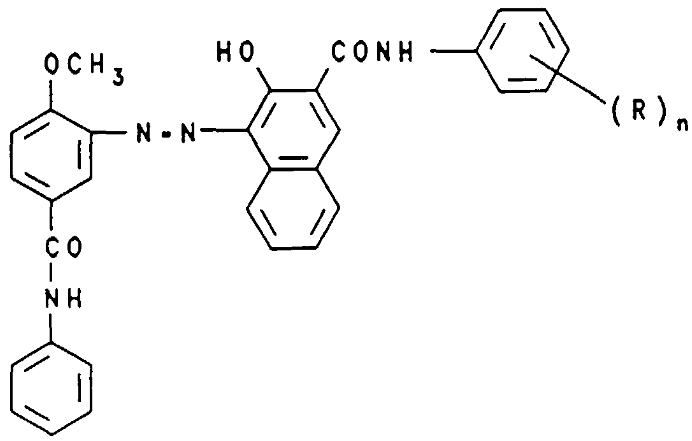

(I)

worin

R gleiche oder verschiedene der Bedeutungen $C_1$-$C_3$-Alkyl, $C_1$-$C_3$-Alkoxy, Chlor und Wasserstoff hat und
n ein Zahl von 1 bis 3 ist,

b) mindestens eine Verbindung der Formel (II)

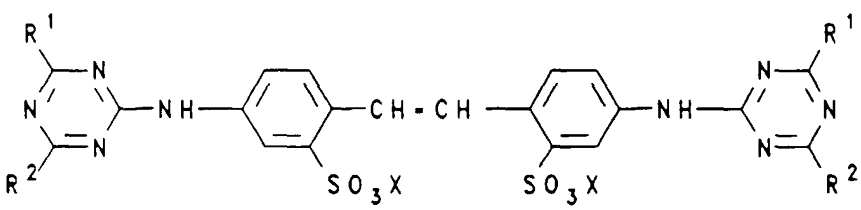

(II)

worin

$R^1$ und $R^2$ gleich oder verschieden sind und für einen Rest der Formeln

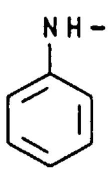 , 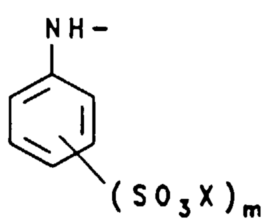 , $(HOCH_2CH_2)_2N-$, $HOCH_2CH_2NH-$

oder für einen fünf- bis siebengliedrigen gesättigten oder ungesättigten aliphatischen oder aromatischen Heterocyclus stehen, der 1 bis 3 Heteroatome aus der Gruppe Stickstoff, Sauerstoff oder Schwefel enthält,

m für die Zahl 1 oder 2, und
X für Wasserstoff, ein Alkalimetall oder für ein stöchiometrisches Equivalent eines Erdalkalimetalls stehen;

und gegebenenfalls
c) weitere übliche Bestandteile und Additive.

**2.** Pigmentzubereitung nach Anspruch 1, dadurch gekennzeichnet, daß

R gleiche oder verschiedene der Bedeutungen Wasserstoff, Methyl, Ethyl, Methoxy, Ethoxy und Chlor

hat,

$R^1$ und $R^2$ gleich oder verschieden sind und für einen Rest der Formeln

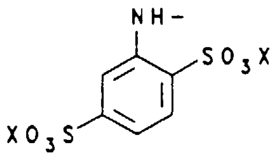
,
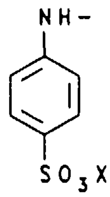
,
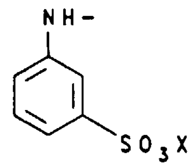
, $HOCH_2CH_2NH-$,

oder für einen Morpholinyl-, 1-Piperidinyl-, 1-Pyrrolidinyl- oder 1-Pyrrolyl-Rest, vorzugsweise einen 1-Morpholinyl-Rest, stehen und

X Wasserstoff, Na oder K ist.

**3.** Pigmentzubereitung nach Anspruch 1 oder 2, dadurch gekennzeichnet, daß das Monoazopigment die Struktur der Formel (Ia) hat

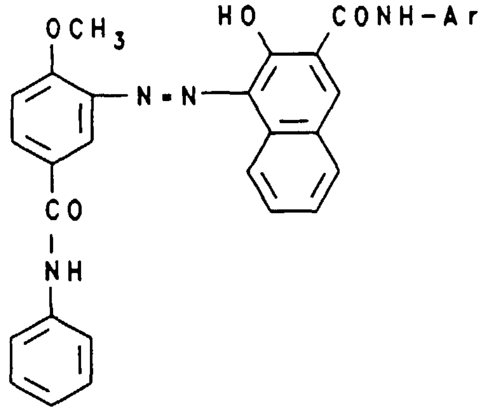
(Ia)

worin Ar die Bedeutung

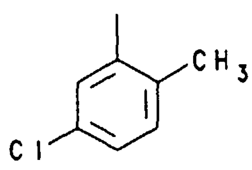
oder
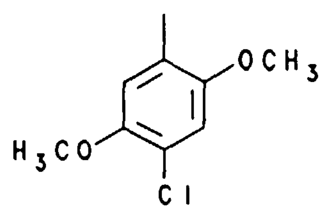

hat.

**4.** Pigmentzubereitung nach mindestens einem der Ansprüche 1 bis 3, dadurch gekennzeichnet, daß die Komponente b) eine Verbindung der Formel (IIa) ist

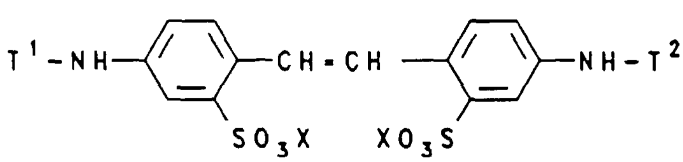
(IIa),

worin $T^1$ und $T^2$ gleich oder verschieden sind, vorzugsweise gleich sind, und die Bedeutungen

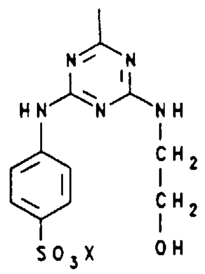

,

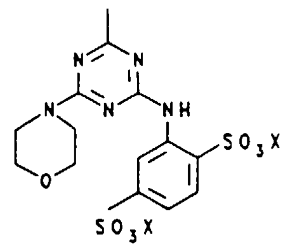

oder

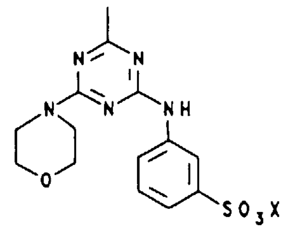

haben und X für Wasserstoff oder Na steht.

5. Pigmentzubereitung nach mindestens einem der Ansprüche 1 bis 4, dadurch gekennzeichnet, daß der Anteil der Komponente b) 0,1 bis 8 Gew.-%, vorzugsweise 0,4 bis 3 Gew.-%, bezogen auf das Gewicht der Pigmentzubereitung (100 Gew.-%) beträgt.

6. Verfahren zur Herstellung einer Pigmentzubereitung nach mindestens einem der Ansprüche 1 bis 5, dadurch gekennzeichnet, daß man die Kupplungsreaktion zur Herstellung des Monoazopigments der Formel (I) oder (Ia) in Gegenwart der Komponente b) durchführt oder indem man die Komponente b) nach Beendigung der Kupplungsreaktion mit der wäßrigen Pigmentsuspension oder einem in Wasser suspendierten Preßkuchen des Monoazopigments vereinigt.

7. Verfahren nach Anspruch 6, dadurch gekennzeichnet, daß man nach Beendigung der Kupplungsreaktion auf eine Temperatur von 20 bis 150°C erwärmt.

8. Verwendung einer Pigmentzubereitung nach mindestens einem der Ansprüche 1 bis 5 zur Herstellung von Druckfarben.

9. Verwendung nach Anspruch 8 zur Herstellung von lösemittelhaltigen oder wäßrigen Tief- und Flexodruckfarben.

**Claims**

1. A pigment preparation comprising

a) at least one monoazo pigment of the formula (I)

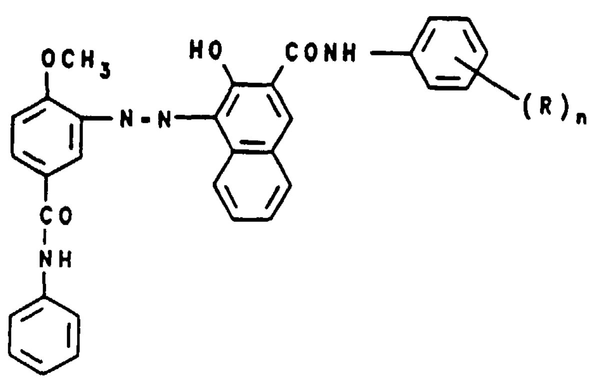

(I)

in which

R is identical or different at each occurrence and is $C_1$-$C_3$-alkyl, $C_1$-$C_3$-alkoxy, chlorine or hydrogen, and
n is a number from 1 to 3,

b) at least one compound of the formula (II)

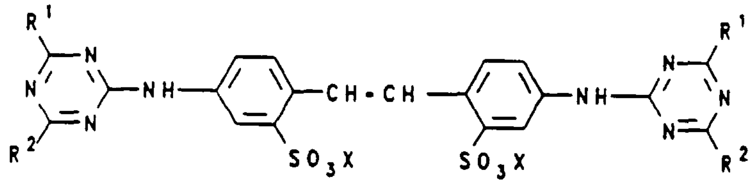

(II)

in which

$R^1$ and $R^2$ are identical or different and are a radical of the formulae

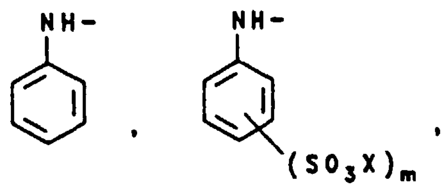

, $(HOCH_2CH_2)_2N-$, $HOCH_2CH_2NH-$

or a five- to seven-membered, saturated or unsaturated, aliphatic or aromatic heterocyclic ring which includes from 1 to 3 heteroatoms from the group consisting of nitrogen, oxygen and sulfur,

m is the number 1 or 2, and
X is hydrogen, an alkali metal or a stoichiometric equivalent of an alkaline earth metal;

and, if desired,
c) further, conventional constituents and additives.

**2.** A pigment preparation as claimed in claim 1, wherein

R is identical or different at each occurrence and is hydrogen, methyl, ethyl, methoxy, ethoxy or chlorine,
$R^1$ and $R^2$ are identical or different and are a radical of the formulae

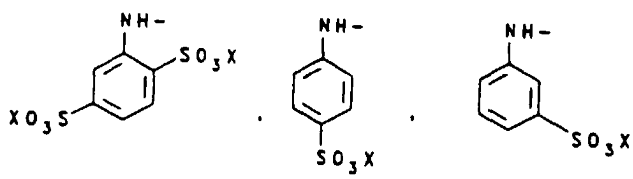

, $HOCH_2CH_2NH-$,

or a morpholinyl, 1-piperidinyl, 1-pyrrolidinyl or 1-pyrrolyl radical, preferably a 1-morpholinyl radical, and
X is hydrogen, Na or K.

**3.** A pigment preparation as claimed in claim 1 or 2, wherein the monoazo pigment has the structure of the formula (Ia)

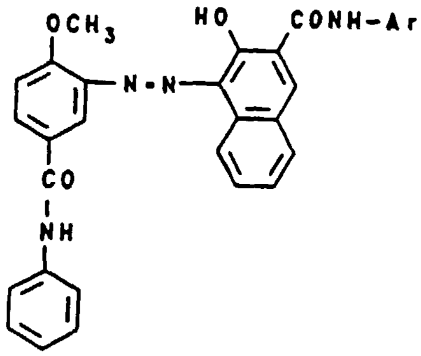

(Ia)

in which Ar is

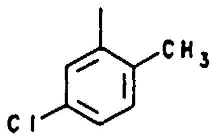

or

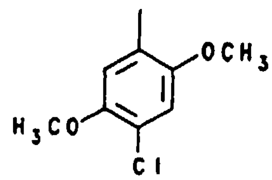

**4.** A pigment preparation as claimed in at least one of claims 1 to 3, wherein component b) is a compound of the formula (IIa)

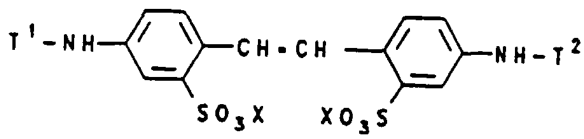

(IIa),

in which $T^1$ and $T^2$ are identical or different, preferably identical, and are

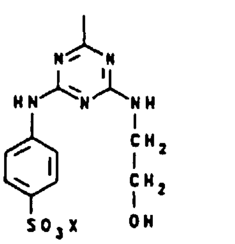

,

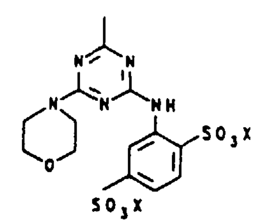

or

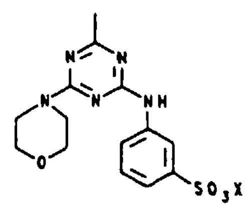

and X is hydrogen or Na.

**5.** A pigment preparation as claimed in at least one of claims 1 to 4, wherein the proportion of component b) is from 0.1 to 8.% by weight, preferably from 0.4 to 3 % by weight, based on the weight of the pigment preparation (100 % by weight).

**6.** A process for producing a pigment preparation as claimed in at least one of claims 1 to 5, which comprises carrying out the coupling reaction to prepare the monoazo pigment of the formula (I) or (Ia) in the presence of component b), or combining component b), after the end of the coupling reaction, with the aqueous pigment suspension or with a filter cake of the monoazo pigment suspended in water.

**7.** The process as claimed in claim 6, wherein the reaction mixture is heated after the end of the coupling reaction at a temperature of from 20 to 150°C.

**8.** The use of a pigment preparation as claimed in at least one of claims 1 to 5 to produce printing inks.

**9.** The use as claimed in claim 8 for producing solvent-containing or aqueous intaglio and flexographic printing inks.

**Revendications**

**1.** Composition de pigments, contenant

a) au moins un pigment monoazoïque de formule (I)

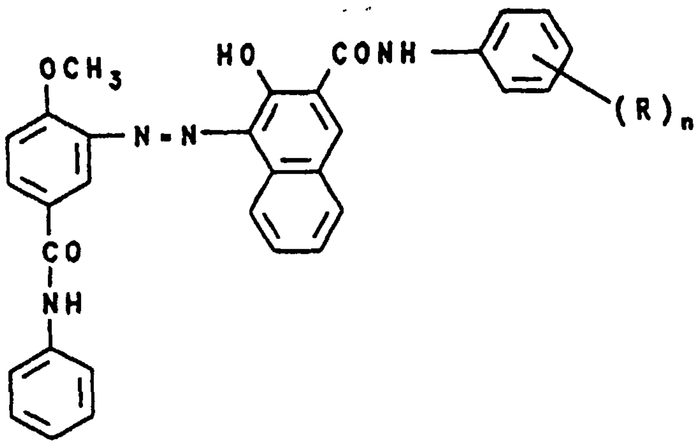

(I)

dans laquelle

R identiques ou différents, représentent un groupe alkyle en $C_1$ à $C_3$, alcoxy en $C_1$ à $C_3$, un atome de chlore et d'hydrogène et

n est un nombre de 1 à 3,

b) au moins un composé de formule (II)

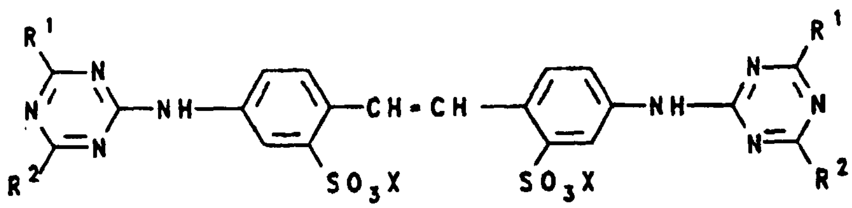

(II)

dans laquelle

$R^1$ et $R^2$ sont identiques ou différents et représentent un groupe des formules

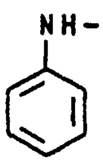 , 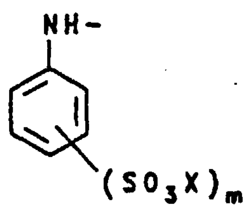 , $(HOCH_2CH_2)_2N-$, $HOCH_2CH_2NH-$

ou un hétérocycle à cinq à sept chaînons, saturé ou insaturé, aliphatique ou aromatique, qui contient de 1 à 3 hétéroatomes choisis parmi l'azote, l'oxygène ou le soufre,

m représente le nombre 1 ou 2, et

X représente un atome d'hydrogène, un métal alcalin ou un équivalent stoechiométrique d'un métal alcalino-terreux;

et éventuellement

c) d'autres constituants et additifs usuels.

2. Composition de pigments selon la revendication 1, caractérisée en ce que,

R identiques ou différents, représentent un atome d'hydrogène, un groupe méthyle, éthyle, méthoxy, éthoxy et un atome de chlore,

$R^1$ et $R^2$ sont identiques ou différents et représentent un groupe des formules

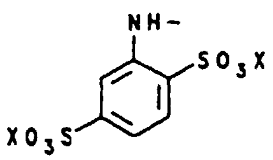
,
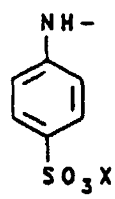
,
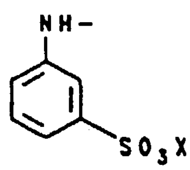
, $HOCH_2CH_2NH-$,

ou un groupe morpholinyle, 1-pipéridinyle, 1-pyrrolidinyle ou 1-pyrrolyle, de préférence un groupe 1-morpholinyle,

et

X est un atome d'hydrogène, Na ou K.

3. Composition de pigments selon la revendication 1 ou 2, caractérisée en ce que, le pigment monoazoïque a la structure de formule (Ia)

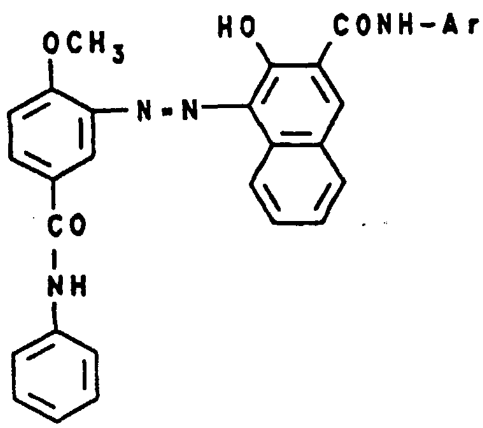

(Ia)

dans laquelle Ar représente

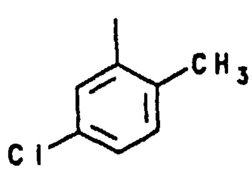

ou

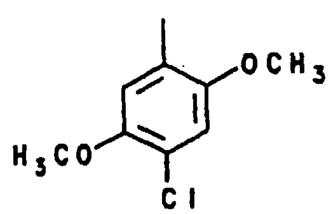

4. Composition de pigments selon au moins une des revendications 1 à 3, caractérisée en ce que, le composant b) est un composé de formule (IIa)

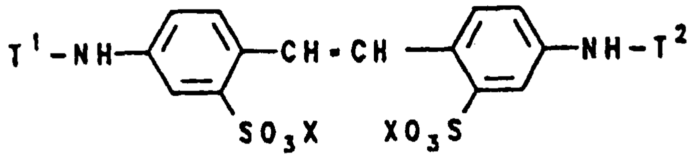 (IIa),

dans laquelle $T^1$ et $T^2$ sont identiques ou différents, sont de préférence identiques, et représentent

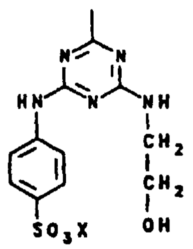 , 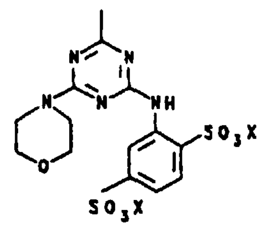 ou 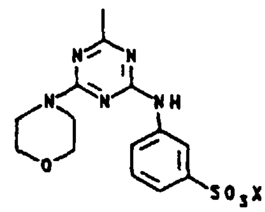

et X représente un atome d'hydrogène ou Na.

**5.** Préparation de pigments selon au moins une des revendications 1 à 4, caractérisée en ce que, la proportion du composant b) s'élève de 0,1 jusqu'à 8% en poids, de préférence de 0,4 jusqu'à 3% en poids, par rapport au poids de la compositions de pigments (100% en poids).

**6.** Procédé pour la préparation d'une composition de pigments selon au moins une des revendications 1 à 5, caractérisé en ce que, l'on réalise la réaction de copulation pour la préparation du pigment monoazoïque de formule (I) ou (Ia) en présence du composant b) ou en combinant le composant b) après la fin de la réaction de copulation avec la suspension aqueuse de pigments ou un gâteau de filtre presse du pigment monoazoïque mis en suspension dans l'eau.

**7.** Procédé selon la revendication 6, caractérisé en ce qu'on chauffe à une température de 20 à 150°C après la fin de la réaction de copulation.

**8.** Utilisation d'une composition de pigments selon au moins une des revendications 1 à 5 pour la préparation de colorants d'impression.

**9.** Utilisation selon la revendication 8 pour la préparation de colorants d'héliographie ou de flexographie à base de solvants et à base aqueuse.